# EUROPEAN PATENT APPLICATION

(11) **EP 4 836 248 A1**
(43) Date of publication of application: **04.11.2026**
(21) Application number: 24911871.2
(22) Date of filing: 10.09.2024
(51) Int. Cl.: H02K 1/2783

(54) **ROTOR AND ROTARY ELECTRIC MACHINE**

(30) Priority: 25.12.2023 JP 2023218020
(71) Applicant: Hitachi, Ltd., Tokyo 100-8280 (JP)
(72) Inventor: WANG, Zhi, Tokyo 100-8280 (JP); TAKAHATA, Ryouichi, Tokyo 100-8280 (JP); UEKI, Yosuke, Tokyo 100-8280 (JP); NAKATSUGAWA, Junnosuke, Tokyo 100-8280 (JP)
(74) Representative: Mewburn Ellis LLP
(86) International application number: PCT/JP2024/032372
(87) International publication number: WO 2025/141977

(57) **Abstract**

A rotor having higher centrifugal force resistance strength and capable of suppressing deformation of a rotor core can be provided.

A rotor having an annular shape in which slots each comprising a housing extending outward in a radial direction from the vicinity of a rotating shaft and a rotor core fixed to an outer peripheral side end portion of the housing are connected in a circumferential direction, wherein the rotor core has a pair of holding portions and bridge portions arranged substantially line-symmetrically with respect to a neutral line connecting a center of the rotating shaft and a center of gravity of the rotor core, and a body portion located on an outer peripheral side of the bridge portions, the holding portions are located within the housing in a fixed state, the bridge portions are provided between the holding portions and the body portion and at positions sandwiched between permanent magnets embedded in a circumferential direction within the rotor core, and the holding portions and the bridge portions are arranged such that a center of gravity of the holding portion is located substantially on a central axis of the bridge portion connecting a center point of an inner diameter-side end portion of the bridge portion and a center point of an outer peripheral side end portion thereof.

## Description

### [Technical Field]

The present invention relates to a rotor and a rotating electrical machine. The present invention claims priority based on Japanese Patent Application No. 2023-218020 filed on December 25, 2023, and, for designated states in which incorporation by reference of documents is permitted, the contents described in that application are incorporated herein by reference.

### [Background Art]

In recent years, development of ultra-multipolar motors aimed at achieving higher rotational speeds for air mobility and various devices has been progressing. On the other hand, with enlargement of rotors due to ultra-multipolarization and higher rotational speeds, securing centrifugal force resistance strength of rotor cores has become an essential issue.

Patent Document 1 describes, with respect to a technology relating to a rotor of a rotating electrical machine, that "a rotor of a rotating electrical machine has a rotor core formed by laminating, in an axial direction, a plurality of annular steel sheets, a plurality of permanent magnets embedded within the rotor core at predetermined intervals in a circumferential direction, and a plurality of openings penetrating the rotor core in the axial direction. The openings are arranged line-symmetrically with respect to a magnetic pole center in a circumferential direction of the permanent magnets disposed within the rotor core, and in the openings, two or more column portions connecting an inner beam portion located on an inner peripheral side of the opening and an outer beam portion located on an outer peripheral side thereof are arranged line-symmetrically with respect to a center line in the circumferential direction of the opening."

### [Prior Art Documents]

### [Patent Literature]

PTL: JP2011-259688 A

### [Summary of the Invention]

### [Problem to be Solved by the Invention]

Rotor cores included in rotors have various types of structures. For example, in a rotor having a structure in which a rotor core is fixed by fitting or pin fastening to an outer peripheral end of a housing extending from a rotating shaft (shaft), a part of the rotor core may be deformed by stress generated by centrifugal force. Specifically, in a rotor core having a structure including a bridge portion located between magnet holes of permanent magnets embedded in the rotor core and extending outward in a radial direction from a holding portion that is a fitting site with the housing, the bridge portion may be deformed by bending stress. Therefore, in such a rotor, there is a demand to suppress deformation of the rotor core by reducing bending stress acting on the bridge portion.

Patent Document 1 discloses a structure for securing strength such that an outer beam portion does not bulge due to centrifugal force during rotation of the rotor. However, the technology of that document is not directed to a structure of a rotor having a holding portion fitted to a housing and a bridge portion extending outward in a radial direction from the holding portion. Therefore, it is difficult to adopt the technology of that document as it is.

The present invention has been made in view of the above problem, and an object thereof is to provide a rotor in which deformation of a rotor core is suppressed and centrifugal force resistance strength is higher.

### [Means for Solving the Problem]

The present application includes a plurality of means for solving at least a part of the above problem, and one example thereof is as follows. A rotor according to one aspect of the present invention for solving the above problem is a rotor having an annular shape in which slots each configured to include a housing extending outward in a radial direction from the vicinity of a rotating shaft and a rotor core fixed to an outer peripheral side end portion of the housing are connected in a circumferential direction, wherein the rotor core has a pair of holding portions and bridge portions arranged substantially line-symmetrically with respect to a neutral line connecting the center of the rotating shaft and the center of gravity of the rotor core, and a body portion located on an outer peripheral side of the bridge portions, the holding portions are located within the housing at the time of fixing, the bridge portions are provided between the holding portions and the body portion and at positions sandwiched between permanent magnets embedded in the circumferential direction within the rotor core, and the holding portions and the bridge portions are arranged such that the center of gravity of the holding portion is located substantially on a central axis of the bridge portion connecting a center point of an inner diameter-side end portion of the bridge portion and a center point of an outer peripheral-side end portion thereof.

### [Effect of the Invention]

According to the present invention, it is possible to provide a rotor in which deformation of a rotor core is suppressed and centrifugal force resistance strength is higher.

Problems, configurations, effects, and the like other than those described above will be made clear by the following description of embodiments.

### [Brief Description of the Drawings]

FIG. 1 is an overall view of a rotor.
FIG. 2 is an enlarged perspective view of a housing and a rotor core for one pole.
FIG. 3 is an enlarged sectional view of a rotor core according to a first embodiment.
FIG. 4 is a partially enlarged view of the rotor core according to the first embodiment.
FIG. 5 is a view for explaining a positional relationship between the center of gravity of a holding portion and a central axis of a bridge portion.
FIG. 6 is a graph showing a relationship between a ratio of L1 and L2 and equivalent stress/fatigue limit.
FIG. 7 is an enlarged sectional view of a rotor core according to a second embodiment.
FIG. 8 is a partially enlarged view of the rotor core according to the second embodiment.
FIG. 9 is a view for explaining a positional relationship between the center of gravity of a holding portion and a central axis of a bridge portion.

### [Description of Embodiments]

The following embodiments are examples for explaining the present invention, and omissions and simplifications are appropriately made for clarity of explanation. The present invention can also be implemented in various other forms. Unless otherwise particularly limited, each constituent element may be singular or plural.

In the drawings, positions, sizes, shapes, ranges, and the like of the respective constituent elements shown may not represent actual positions, sizes, shapes, ranges, and the like in order to facilitate understanding of the invention. Therefore, the present invention is not necessarily limited to the positions, sizes, shapes, ranges, and the like disclosed in the drawings.

When there are a plurality of constituent elements having the same or similar functions, explanation may be given with the same reference sign attached with different suffixes. Further, when it is not necessary to distinguish among the plurality of constituent elements, explanation may be given without suffixes.

Embodiments of the present invention will now be described below with reference to the drawings.

<First Embodiment>

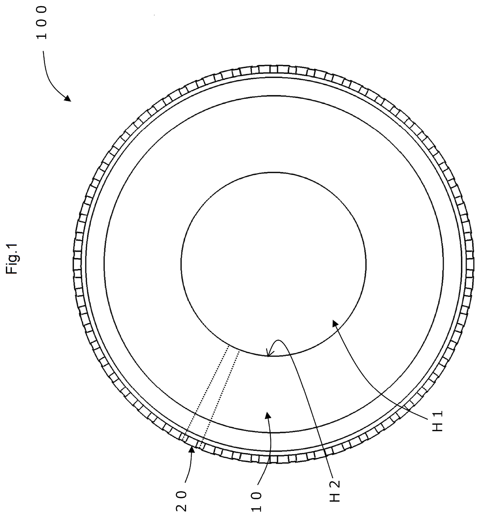

FIG. 1 is an overall view of a rotor 100 according to the present embodiment. As shown in the figure, the rotor 100 has an annular shape configured by connecting, in the circumferential direction, a predetermined number of slots (66 in the illustrated example (for 66 poles)), each slot including a housing 10 extending outward in a radial direction of the rotor 100 from an edge H2 of an insertion hole H1 for a shaft (not shown), which is a rotating shaft, and a rotor core 20 fitted and fixed to an outer peripheral side end portion of the housing 10.

The rotor core 20 corresponds to a magnetic pole portion of the rotor 100 formed by laminating a predetermined number of electromagnetic steel sheets in the axial direction. Although not shown, outside the rotor 100, a stator having a stator core around which a stator winding (stator coil) is wound is disposed coaxially with the outer peripheral surface of the rotor 100 with a predetermined gap therebetween. The rotor 100 and the stator constitute part of a rotating electrical machine (motor) used in air mobility and various other devices.

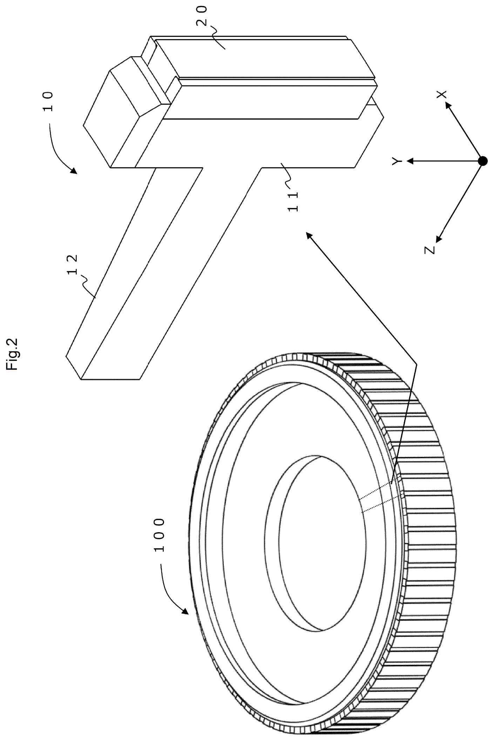

FIG. 2 is an enlarged perspective view of the housing 10 and the rotor core 20 for one pole. As shown in the figure, the housing 10 has a vertically elongated portion 11 elongated in the axial direction (Y-axis direction) of the rotor 100, and a horizontally elongated portion 12 elongated in a horizontal direction (Z-axis direction) substantially orthogonal to the axial direction of the rotor 100. The rotor core 20 has a length from the upper end to the vicinity of the lower end of the vertically elongated portion 11, and is fixed so as to fit to the vertically elongated portion 11.

Specifically, the rotor core 20 is provided with a convex portion (a holding portion described later) having an axial length from the upper end to the lower end and fitted to the housing 10. The vertically elongated portion 11 of the housing 10 has an axial length at least equal to (or longer than) the axial length of the rotor core 20, and is provided with a concave portion that receives the convex portion of the rotor core 20. Further, by inserting the convex portion of the rotor core 20 in the axial direction into the concave portion of the housing 10, the rotor core 20 is fitted and fixed to the outer peripheral surface of the housing 10.

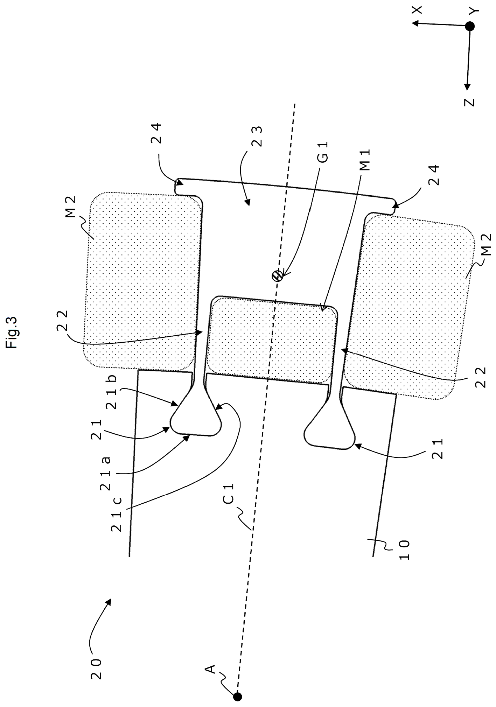

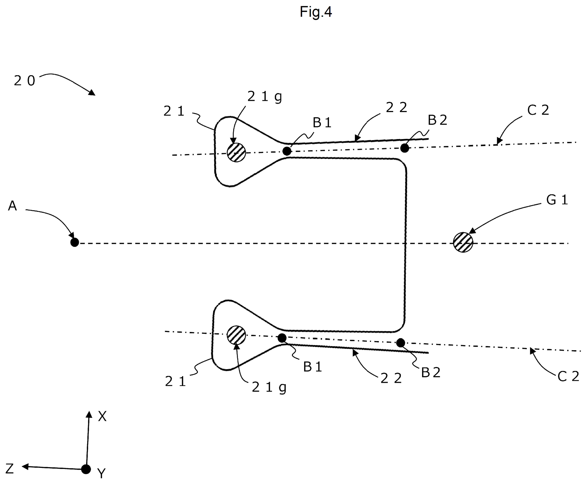

FIG. 3 is an enlarged sectional view of the rotor core according to the present embodiment. FIG. 4 is a partially enlarged view of the rotor core.

As shown in these figures, the rotor core 20 has holding portions 21, bridge portions 22, a body portion 23, and ear portions 24.

The rotor core 20 has a structure substantially plane-symmetrical with respect to a neutral plane defined in the axial direction (the Y-axis direction in the figure) along a straight line connecting a center A of the rotating shaft and a center of gravity G1 of the rotor core 20. In other words, the rotor core 20 has a pair of holding portions 21, bridge portions 22, and ear portions 24 arranged substantially line-symmetrically with respect to a neutral line C1 that is the straight line defining the neutral plane, and the body portion 23. The pair of holding portions 21 and bridge portions 22 are each separated from the neutral line C1 by a predetermined distance, and one holding portion 21 and bridge portion 22 and the other holding portion 21 and bridge portion 22 are formed independently from the body portion 23 inward in a radial direction.

Each holding portion 21 is a convex portion located within the housing 10 when the rotor core 20 is fitted to the housing 10. Specifically, each holding portion 21 has a substantially triangular shape, and has contact surfaces 21a, 21b, and 21c that contact the housing 10. The contact surfaces 21b and 21c are narrowed at an acute angle outward in the radial direction from both ends of the contact surface 21a. Therefore, even when a load in the outward radial direction acts due to centrifugal force, the holding portion 21 catches on the inner side surface of the concave portion of the housing 10, so that the rotor core 20 has a structure that does not detach from the housing 10.

Each bridge portion 22 is a portion located between an outer peripheral side end portion of the holding portion 21 and the body portion 23, and is provided at a position sandwiched between a first permanent magnet M1 and a second permanent magnet M2 when the first permanent magnet M1 and the second permanent magnet M2 are embedded in the rotor core 20 in the circumferential direction in a Halbach array. The width of the bridge portion 22 in the circumferential direction is formed narrower than the width of the contact surface 21a.

The body portion 23 is a portion located between an outer peripheral side end portion of the bridge portion 22 and the outer peripheral surface of the rotor 100. Further, the body portion 23 has protruding ear portions 24 at both ends in the circumferential direction.

The first permanent magnet M1 and the second permanent magnet M2 embedded in the rotor core 20 are fixed while being sandwiched between the bridge portions 22, the body portion 23, and the housing 10. Specifically, the first permanent magnet M1 is fixed while being sandwiched between the outer contour of the housing 10, an inner side of the bridge portion 22, and one side of the body portion 23 in the inner diameter direction of the rotor 100. Further, the second permanent magnet M2 is fixed while being sandwiched between two adjacent slots. Specifically, the second permanent magnet M2 is fixed while being sandwiched between the outer contour of the housing 10, an outer side of the bridge portion 22, and the ear portion 24 in one slot, and the bridge portion 22, the body portion 23, and the ear portion 24 of the rotor core 20 in the other adjacent slot.

The first permanent magnet M1 and the second permanent magnet M2 are embedded in the circumferential direction in a Halbach array, and the first permanent magnet M1 has a substantially rectangular shape longer in the circumferential direction than in the outward radial direction of the rotor 100. Further, the second permanent magnet M2 has a substantially rectangular shape longer in the outward radial direction than in the circumferential direction of the rotor 100.

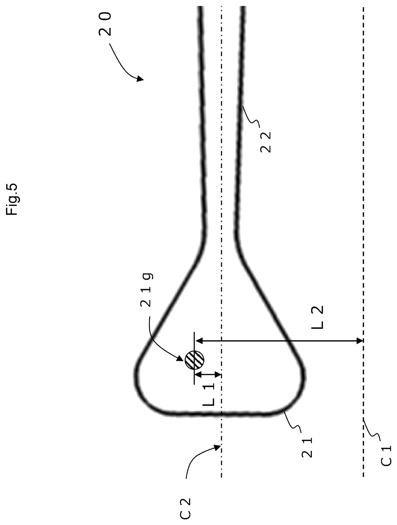

Next, with reference to FIGS. 4 and 5, a positional relationship between the center of gravity of the holding portion 21 and the central axis of the bridge portion 22 will be described.

FIG. 5 is a view for explaining a positional relationship between the center of gravity of the holding portion and the central axis of the bridge portion. The central axis C2 of the bridge portion 22 is defined by a straight line connecting a center point B1 of an inner diameter-side end portion of the rotor 100 and a center point B2 of an outer peripheral side end portion thereof.

In order to explain a distance L1 between the center of gravity 21g of the holding portion 21 and the central axis C2 of the bridge portion 22, FIG. 5 shows an example in which the positions of the two are shifted from each other.

In the rotor core 20 of the rotor 100 according to the present embodiment, when the distance from the center of gravity 21g of the holding portion 21 to the central axis C2 of the bridge portion 22 is L1, the holding portion 21 and the bridge portion 22 are provided such that the distance L1 becomes a value closer to 0 (zero). That is, as shown in FIG. 4, the center of gravity 21g of the holding portion 21 is arranged so as to be located substantially on the central axis C2 of the bridge portion 22.

By arranging the center of gravity 21g of the holding portion 21 so as to be located substantially on the central axis C2 of the bridge portion 22 in this manner, a bending moment (bending stress) acting on the bridge portion 22 during rotation of the rotor 100 can be reduced. As a result, deformation of the bridge portion 22 bulging in the circumferential direction due to the action of the bending moment can be suppressed.

Although it is most preferable that L1 be substantially 0 (zero), that is, that the center of gravity 21g of the holding portion 21 be located on the central axis C2 of the bridge portion 22, when a distance from the neutral line C1, which passes through the center of gravity G1 of the rotor core 20 and substantially bisects the rotor core 20, to the center of gravity 21g of the holding portion 21 is L2, the position of the center of gravity 21g of the holding portion 21 with respect to the central axis C2 of the bridge portion 22 may be set within a range satisfying the condition of L1/L2 < 0.2. The condition of less than 0.2 is based on a value derived from a relationship between equivalent stress/fatigue limit and L1/L2 (the ratio of L1 and L2).

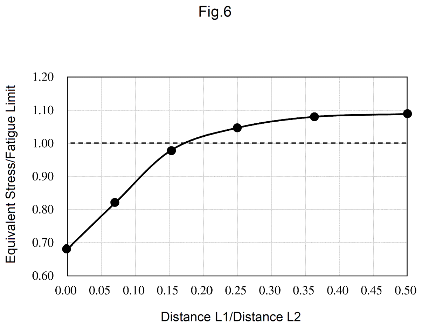

FIG. 6 is a graph showing a relationship between the ratio of L1 and L2 and equivalent stress/fatigue limit. As shown in the figure, the graph indicates equivalent stress/fatigue limit on the vertical axis and the distance L1/L2 on the horizontal axis. Further, equivalent stress/fatigue limit, simply stated, indicates that the rotor core 20 is damaged (deformed) at a value of 1.0 or more, or is damaged (deformed) after a predetermined load period.

As shown in FIG. 6, the closer L1/L2 is to 0 (zero), the lower the value of equivalent stress/fatigue limit becomes. That is, FIG. 6 shows that the closer L1 becomes to 0 (zero) due to the center of gravity 21g of the holding portion 21 being located substantially on the central axis C2 of the bridge portion 22, the less likely the rotor core 20 is to deform.

The structure of the rotor core of the rotor according to the first embodiment has been described above. According to such a rotor, deformation of the rotor core is suppressed, and a rotor having higher centrifugal force resistance strength can be provided.

In particular, although it is most preferable that the center of gravity of the holding portion be located on the central axis of the bridge portion, by setting the position of the center of gravity of the holding portion with respect to the central axis of the bridge portion within a range satisfying the condition of L1/L2 < 0.2, deformation of the rotor core can be suppressed even when a load due to centrifugal force acts.

Further, in the first embodiment, the holding portions 21 have been shown as a pair structure substantially line-symmetrical with respect to the neutral line C1, but the present invention is not limited thereto. For example, the pair of holding portions 21 may have a structure in which they are connected to each other and integrated. Alternatively, the holding portions may be one set of holding portion groups formed by a plurality of holding portions 21 having different shapes.

### <Second Embodiment>

The rotor 100 according to the present embodiment is an embodiment in which a rotor core 30 is fixed to the outer peripheral side end portion of the housing 10 by pin fastening.

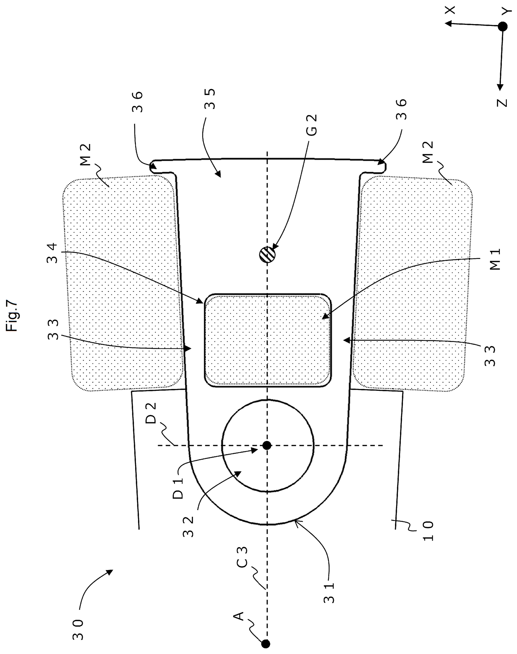

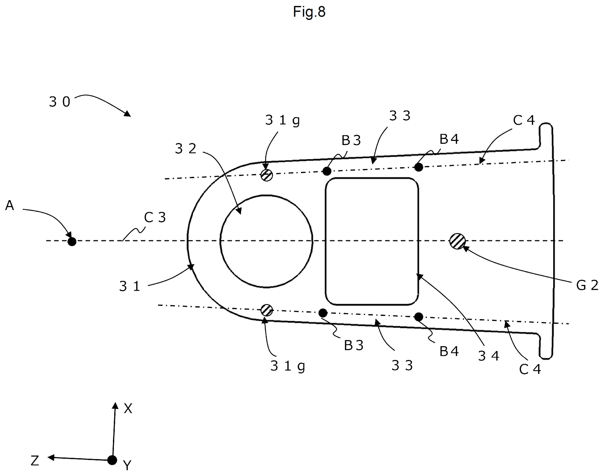

FIG. 7 is an enlarged sectional view of the rotor core according to the second embodiment. FIG. 8 is a partially enlarged view of the rotor core according to the second embodiment.

As shown in these figures, the rotor core 30 has a holding portion 31, a pin hole 32, bridge portions 33, a magnet hole 34, a body portion 35, and ear portions 36. Detailed description of the same configurations and objects as those of the respective portions of the rotor 100 shown in the first embodiment, the neutral plane, the neutral line, and the like is omitted by denoting them by the same reference signs.

Similarly to the first embodiment, the rotor core 30 has a structure substantially plane-symmetrical (line-symmetrical) with respect to a neutral plane (neutral line C3) defined in the axial direction (the Y-axis direction in the figure) along a straight line connecting the center A of the rotating shaft and a center of gravity G2 of the rotor core 30.

The holding portion 31 is a portion located within the housing 10 when the rotor core 30 is pin-fastened to the housing 10. Specifically, the holding portion 31 has an inner diameter-side end portion having an arcuate shape, and the pin hole 32 is provided at a substantially central position. Further, the magnet hole 34 in which the first permanent magnet M1 is embedded is provided on the outer peripheral side of the holding portion 31 with a predetermined spacing therebetween. Further, when a portion located on the inner diameter side of the rotor 100 is defined as a front portion and a portion located on the outer peripheral side is defined as a rear portion, with reference to a partition line D2 passing through a center point D1 of the pin hole 32 and substantially orthogonal to the neutral line C3, the holding portion 31 has a shape in which front portions and rear portions, respectively, of one side and the other side arranged substantially line-symmetrically with respect to the neutral line C3 are connected to each other.

The pin hole 32 is a through-hole into which a pin (not shown) for fixing the rotor core 30 to the housing 10 is inserted. The pin hole 32 is provided such that its center position is located substantially on the neutral line C3, which passes through the center of gravity G2 of the rotor core 30 and substantially bisects the rotor core 30. The diameter of the pin hole 32 is set to any diameter according to the size of the inserted pin. The rotor core 30 has a structure such that it does not detach from the housing 10 even when a load outward in the radial direction acts due to centrifugal force by being pin-fastened to the housing 10.

Each bridge portion 33 is a portion located between an outer peripheral side end portion of the holding portion 31 and the body portion 35, and is provided at a position sandwiched between the first permanent magnet M1 and the second permanent magnet M2 embedded in the rotor core 30.

The body portion 35 is a portion located between an outer peripheral side end portion of the bridge portion 33 and the outer peripheral surface of the rotor 100. Further, the body portion 35 has protruding ear portions 36 at both ends in the circumferential direction.

Further, the rotor core 30 is provided with the magnet hole 34 in which the first permanent magnet M1 is embedded between the holding portion 31 and the body portion 35. The position of the second permanent magnet M2 is the same as in the first embodiment, and therefore detailed description thereof is omitted. The first permanent magnet M1 and the second permanent magnet M2 are embedded in the rotor core 30 in a Halbach array, similarly to the first embodiment.

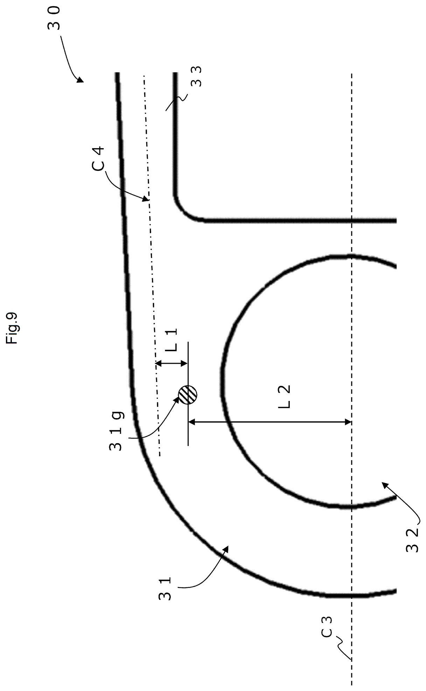

Next, with reference to FIGS. 8 and 9, a positional relationship between the center of gravity of the holding portion 31 and the central axis of the bridge portion 33 will be described.

FIG. 9 is a view for explaining a positional relationship between the center of gravity of the holding portion and the central axis of the bridge portion. The central axis C4 of the bridge portion 33 is defined by a straight line connecting a center point B3 of an inner diameter-side end portion of the rotor 100 and a center point B4 of an outer peripheral side end portion thereof.

In order to explain the distance L1 between the center of gravity 31g of the holding portion 31 and the central axis C4 of the bridge portion 33, FIG. 9 shows an example in which the positions of the two do not coincide.

In the rotor core 30 of the rotor 100 according to the present embodiment, when the distance from the center of gravity 31g of the holding portion 31 to the central axis C4 of the bridge portion 33 is L1, the holding portion 31 and the bridge portion 33 are provided such that the distance L1 becomes a value closer to 0 (zero). That is, the center of gravity 31g of the holding portion 31 is arranged so as to be located substantially on the central axis C4 of the bridge portion 33.

Further, similarly to the first embodiment, when a distance from the neutral line C3, which passes through the center of gravity G2 of the rotor core 30 and substantially bisects the rotor core 30, to the center of gravity 31g of the holding portion 31 is L2, the position of the center of gravity 31g of the holding portion 31 with respect to the central axis C4 of the bridge portion 33 may be set within a range in which L1/L2 < 0.2 is satisfied.

In this manner, by setting at least the position of the center of gravity 31g of the holding portion 31 with respect to the central axis C4 of the bridge portion 33 within a range in which L1/L2 < 0.2 is satisfied, it is possible to reduce a bending moment (bending stress) acting on the bridge portion 33 during rotation of the rotor 100, and to provide the rotor 100 having higher centrifugal force resistance strength.

Further, in the second embodiment, the rotor core 30 has been shown as being provided with one pin hole 32, but the present invention is not limited thereto. For example, the rotor core 30 may be provided with a plurality of pin holes for fixing to the housing.

Further, the present invention is not limited to the above-described embodiments and modified examples, and various modified examples are included within the scope of the same technical idea. For example, the above-described embodiments have been described in detail in order to explain the present invention in an easy-to-understand manner, and are not necessarily limited to those including all of the configurations described. Further, part of a configuration of one embodiment may be replaced with part of a configuration of another embodiment, and a configuration of another embodiment may be added to a configuration of one embodiment. Further, with respect to part of a configuration of each embodiment, addition, deletion, and replacement of another configuration may be made.

### [Description of Reference Signs]

100: rotor, 10: housing, 20: rotor core according to the first embodiment, 21: holding portion, 22: bridge portion, 23: body portion, 24: ear portion, C1: neutral line, C2: central axis of bridge portion, G1: center of gravity of rotor core, 21G: center of gravity of holding portion, 30: rotor core according to the second embodiment, 31: holding portion, 32: pin hole, 33: bridge portion, 34: magnet hole, 35: body portion, 36: ear portion, C3: neutral line, C4: central axis of bridge portion, G2: center of gravity of rotor core, 31G: center of gravity of holding portion, L1: distance from center of gravity of holding portion to central axis of bridge portion, L2: distance from center of gravity of holding portion to neutral line

## Claims

1. A rotor having an annular shape in which slots, each comprising a housing extending outward in a radial direction from the vicinity of a rotating shaft and a rotor core fixed to an outer peripheral side end portion of the housing, are connected in a circumferential direction, wherein
the rotor core has a pair of holding portions and bridge portions arranged substantially line-symmetrically with respect to a neutral line connecting a center of the rotating shaft and a center of gravity of the rotor core, and a body portion located on an outer peripheral side of the bridge portions;
the holding portions are located within the housing in a fixed state;
the bridge portions are provided between the holding portions and the body portion and at positions sandwiched between permanent magnets embedded in a circumferential direction within the rotor core; and
the holding portions and the bridge portions are arranged such that a center of gravity of the holding portion is located substantially on a central axis of the bridge portion connecting a center point of an inner diameter-side end portion of the bridge portion and a center point of an outer peripheral side end portion thereof.

2. The rotor according to claim 1, wherein
where a distance from the center of gravity of the holding portion to the central axis of the bridge portion is L1, and a distance from the center of gravity of the holding portion to the neutral line is L2,
the center of gravity of the holding portion and the central axis of the bridge portion are set such that a relationship of L1/L2 < 0.2 is satisfied.

3. The rotor according to claim 1, wherein
the pair of holding portions and bridge portions are separated from the neutral line by a predetermined distance from each other, and are independently formed inward in a radial direction from the body portion, and
the holding portions are fitted and fixed to the housing.

4. The rotor according to claim 1, wherein
the pair of holding portions have an integrated structure connected to each other.

5. The rotor according to claim 1, wherein
the holding portion is provided with a pin hole, and a magnet hole in which a magnet is embedded is provided on an outer peripheral side of the holding portion with a predetermined interval therebetween,
the holding portion has a front portion located on an inner diameter side and a rear portion located on an outer peripheral side, with reference to a partition line passing through a substantially central point of the pin hole and substantially orthogonal to the neutral line, and have a shape in which the front portions and the rear portions, respectively, of one side and the other side arranged substantially line-symmetrically with respect to the neutral line are connected to each other, and is fixed to the housing by pin fastening.

6. A rotating electrical machine comprising a rotor having an annular shape in which slots, each comprising a housing extending outward in a radial direction from the vicinity of a rotating shaft and a rotor core fixed to an outer peripheral side end portion of the housing, are connected in a circumferential direction, wherein
the rotor core of the rotor has a pair of holding portions and bridge portions arranged substantially line-symmetrically with respect to a neutral line connecting a center of the rotating shaft and a center of gravity of the rotor core, and a body portion located on an outer peripheral side of the bridge portions,
the holding portions are located within the housing in a fixed state,
the bridge portions are provided between the holding portions and the body portion and at positions sandwiched between permanent magnets embedded in a circumferential direction within the rotor core, and
the holding portions and the bridge portions are arranged such that a center of gravity of the holding portion is located substantially on a central axis of the bridge portion connecting a center point of an inner diameter-side end portion of the bridge portion and a center point of an outer peripheral side end portion thereof.
